# EUROPÄISCHE PATENTSCHRIFT

(11) **EP 2 907 427 B1**
(45) Veröffentlichungstag und Bekanntmachung des Hinweises auf die Patenterteilung: **04.01.2017**
(21) Anmeldenummer: 15153974.9
(22) Anmeldetag: 05.02.2015
(51) Int. Cl.: A47J 31/36, A47J 31/38

(54) **Antrieb für die Brüheinheit eines Kaffeevollautomaten**
Drive for the brewing unit of an automatic coffee maker
Entraînement pour une unité de chauffage d'une machine à café totalement automatique

(30) Priorität: 14.02.2014 DE 102014202780
(43) Veröffentlichungstag der Anmeldung: 19.08.2015
(73) Patentinhaber: BSH Bosch und Siemens Hausgeräte GmbH, 81739 München (DE)
(72) Erfinder: Eder, Florian, 83132 Pittenhart (DE); Strobl, Robert, 83246 Unterwössen (DE)

(56) Entgegenhaltungen:
- EP-A2- 2 596 767
- EP-B1- 1 859 713
- DD-A7- 288 734
- DE-A1- 1 805 268
- DE-T2- 60 003 653
- DE-U1- 9 115 998

## Beschreibung

Die Erfindung betrifft einen Kaffeevollautomaten für Haushaltszwecke mit einer Spindel-Brüheinheit, mit einem elektromotorischen Antrieb der Brüheinheit und mit einem Getriebe zwischen dem Antrieb und der Brüheinheit, der insbesondere eine Brühkammer zwischen mehreren Zubereitungspositionen verfährt. Der elektromotorische Antrieb, regelmäßig (aber nicht nur) ein Gleichstrom- oder DC-Motor, stellt das Antriebsglied dar, die Brüheinheit und insbesondere die Brühkammer das Abtriebsglied. Zwischen beiden ist das Getriebe als Einrichtung zum Umformen der durch den Antrieb gegebenen Bewegung in eine am Abtrieb gewünschte Bewegung angeordnet. Das Getriebe dient unter anderem auch dazu, die regelmäßig hohe Umdrehungszahl des Elektromotors auf eine für die Brüheinheit geeignete Umdrehungszahl herabzusetzen.

Der Bewegungsablauf von Spindel-Brüheinheiten bedingt ein sehr ungleichmäßiges Lastprofil. Lastspitzen, wie sie z. B. beim Verpressen des Kaffees auftreten, bestimmen daher die Grundauslegung des Getriebes und des Antriebs, die daher für die übrige, größere Betriebsdauer überdimensioniert ist. Durch die Getriebeauslegung ist im Wesentlichen die Verfahrgeschwindigkeit der Brüheinheit bestimmt. Aus Gründen der elektrischen Sicherheit erfordern die eingesetzten Elektromotoren regelmäßig einen Thermoschutzschalter sowie ein auf die Lastspitzen hin dimensioniertes Netzteil.

Eine gattungsbildende Spindel-Brüheinheit ist aus der DE 91 15 998 U1 bekannt. Der dort offenbarte Brühzylinder ist durch eine angetriebene Gewindespindel in unterschiedliche Stellungen bewegbar.

Dazu ist aus der EP 1 859 713 B1 eine Kniehebel-Brüheinrichtung zum Halten von Getränkekapseln bekannt. Mittels eines manuell zu bedienenden Kniehebels kann eine Kapselhalteeinrichtung der Brüheinrichtung aus einer Beladestellung in eine dicht abschließende Brühstellung bewegt werden. Durch eine elliptisch gestaltete Getriebestufe wird die Hebelbewegung nichtlinear auf die Kapselhalteeinrichtung übertragen.

Eine Vorrichtung und ein Verfahren zum Steuern und Schließen einer Brühkammer für Getränkekapseln ist dazu aus der DE 600 03 653 T2 bekannt.

Aufgabe der Erfindung ist es, einen Kaffeevollautomaten mit Spindel-Brüheinheit anzugeben, dessen Motor- und Getriebeauslegung nicht überdimensioniert ist.

Diese Aufgabe wird bei dem eingangs genannten Kaffeevollautomaten erfindungsgemäß durch einen nicht-linearen Getriebeabschnitt im Getriebe zwischen dem Antrieb und dem Abtrieb gelöst, der dem gesamten Getriebe nicht-lineare Eigenschaften verleiht. Der nicht-lineare Getriebeabschnitt erzeugt wechselnde Verfahrgeschwindigkeiten und Kraftbeaufschlagungen der Brühkammer. Nicht-lineare Getriebe bieten eine ungleichmäßige Übersetzung bzw. eine nicht-lineare Übertragungsfunktion, also einen gesetzmäßigen Zusammenhang zwischen einem regelmäßig linearen Antrieb und einem planmäßig nicht-linearen Abtrieb. Sie weisen daher einen Bereich mit erhöhter und einen mit verminderter Übertragungsgeschwindigkeit auf und damit auch einen umgekehrten Bereich, entsprechend mit vermindertem und einen mit erhöhtem Drehmoment. Erfindungsgemäß werden diese kinematischen Verhältnisse dazu genutzt, zumindest im Bereich der Lastspitzen eine maximale Untersetzung und damit ein maximales Drehmoment zu erzeugen, während im übrigen Bereich eine weniger starke oder keine Untersetzung bzw. ggf. eine Übersetzung mit entsprechend niedrigem Drehmoment vorliegt. Ein hohes Drehmoment wird in der Regel dann abgerufen, wenn ein Brüh-Kolben der Brüheinheit in die verfahrbare Brühkammer eintaucht, dabei ein O-Ring als Dichtring zwischen beiden Bauteilen eine gewisse Einführkraft erfordert, und wenn anschließend das Kaffeepulver verpresst wird.

Die Bandbreite der Übersetzungsverhältnisse ist abhängig von den Abmessungen der Getriebeglieder. Mit der Anordnung eines erfindungsgemäßen nicht-linearen Getriebeabschnitts kann dessen Bereich mit verminderter Übertragungsgeschwindigkeit und erhöhtem Drehmoment genau in demjenigen Verfahrbereich der Brühkammer angeordnet sein, in dem eine hohe Verfahrkraft erforderlich ist. Der nicht-lineare Getriebeabschnitt ermöglicht also trotz eines linearen Antriebs mit konstanter Winkelgeschwindigkeit eine der tatsächlichen Belastung angepasste schwankende Winkelgeschwindigkeit. Damit kann auch ein schwächerer als ein herkömmlicher Elektromotor die Lastspitzen einer Brüheinheit abdecken, weil bei ihrem Auftreten das nicht-lineare Getriebe für eine geeignete Untersetzung sorgt. Im übrigen Bereich dagegen kann die Untersetzung geringer ausfallen, weil die Brüheinheit beispielsweise beim Verfahren der unbelasteten Brühkammer dem Elektromotor nur eine geringere Leistung abfordert.

Die Erfindung beruht auf der Erkenntnis, dass herkömmliche Elektromotoren in Kaffeevollautomaten auf die auftretenden Lastspitzen ausgelegt werden, während des übrigen und damit größten Teils des Betriebs an sich aber überdimensioniert sind. Mit dem erfindungsgemäßen nicht-linearen Getriebe dagegen lassen sich kleinere und damit kostengünstigere Motoren einsetzen. Auf teure Thermoschutzschalter kann infolgedessen verzichtet werden. Außerdem lassen sich kleinere und kostengünstigere Netzteile für die Steuerelektronik einsetzen. Schließlich lässt sich dadurch auch eine Verkürzung der Verfahrzeit der Brüheinheit erreichen, beispielsweise eine kürzere Verfahrzeit der Brühkammer zwischen einer Befüllstellung und einer Brühstellung. Die Erfindung ermöglicht folglich kürzere Zubereitungszeiten trotz des Einsatzes schwächerer Motoren.

Als nicht-lineare Getriebe sind beispielsweise Kurvengetriebe, Koppelgetriebe oder Malteserkreuzgetriebe bekannt. Nach einer vorteilhaften Ausgestaltung der Erfindung kann ein Reib- oder Zahnradgetriebe mit mindestens zwei supplementär unrund geformten Rädern vorgesehen sein, die eine unrunde Wälzlinie bieten. Unrund geformte Räder können von einer quadratischen Grundform ausgehend abgerundet geformt sein oder mit ellipsenförmigen gekoppelten Rädern ausgebildet sein. Sind erhebliche Kräfte über das Getriebe zu übertragen, wird anstelle eines Reibradgetriebes eher ein Zahnradgetriebe mit mindestens zwei formschlüssig gekoppelten Zahnrädern als nicht-lineares Getriebe bevorzugt. Das Übersetzungsverhältnis ändert sich im Laufe einer vollständigen Umdrehung mindestens eines der Zahnräder entsprechend der kontinuierlichen Änderungen der komplementären Radien des Zahneingriffes untereinander. Es wird so eingestellt, dass ein geringes Übersetzungsverhältnis vorliegt, wenn ein hohes Drehmoment in der Brüheinheit erforderlich ist. Ein wesentlich geringeres Drehmoment dagegen erfordert das bloße Verfahren der Brühkammer beispielsweise zwischen einer Brühposition und einer Befüllposition. In diesem Bereich fällt das Übersetzungsverhältnis deutlich größer aus, womit statt einer gewünschten Kraft eine höhere Geschwindigkeit des Verfahrens erreicht werden kann. Durch geeignete Wahl der Radien der beispielsweise ellipsenförmigen Zahnräder und ihrer Anordnung relativ zueinander kann damit ein geeigneter Verlauf der Änderung des Übersetzungsverhältnisses des Getriebes erreicht werden.

Nach einer dazu alternativen Ausgestaltung der Erfindung kann der Kaffeevollautomat über ein Koppel- oder Kurvengetriebe als nichtlineares Getriebe verfügen. Als Koppelgetriebe sind beispielsweise Antiparallelkurbelgetriebe mit einer Hilfsverzahnung zur Überwindung einer Verzweigung- bzw. Decklage bekannt, die gleichläufig oder gegenläufig ausgelegt sein können. Als Kurvengetriebe kann beispielsweise ein Wälzhebelgetriebe dienen, das ebenfalls eine gleichsinnige Übertragungsfunktion mit Bereichen erhöhter und verminderter Übertragungsgeschwindigkeit und mit einem entsprechend umgekehrten Drehmomentenverlauf bietet. Ein weiteres geeignetes Kurvengetriebe kann ein Nutkurvengetriebe sein, das sich einfach und kostengünstig herstellen lässt und einen nur geringen Bauraum erfordert. Mit einer sich kreuzenden Nut lässt sich außerdem eine wechselsinnige Übertragungsfunktion erzeugen, die Bauteile für die Steuerung eines sonst erforderlichen Vor- und Rücklaufs des Motors erübrigen und damit Konstruktions- und Kostenvorteile bieten kann.

Nach einer dazu alternativen Ausgestaltungsform der Erfindung kann ein Kaffeevollautomat mit einer Spindel-Brüheinheit, bei der die Brühkammer über eine Gewindespindel angetrieben und verfahren wird, ein nicht-lineares Getriebe zwischen dem Antrieb und der Gewindespindel umfassen. Da die Gewindespindel mehrere Umdrehungen vollführt, um die Brühkammer zwischen einer unteren, abgesenkten Position, in der sie beispielsweise befüllt wird, und einer oberen Brühposition zu bewegen, gibt es bei einer Spindel-Brüheinheit in der Regel mehrere Umdrehungen, in denen eine große Lastentfaltung im Zusammenhang mit der Brühposition erforderlich ist, und mehrere Umdrehungen, bei denen die Brühkammer unter geringem Kraftaufwand verfahren und beispielsweise ausgeschwenkt wird. Das nicht-lineare Getriebe kann demzufolge derart ausgelegt sei, dass jedenfalls bei denjenigen Umdrehungen der Spindel, die für den kraftaufwändigen Brühvorgang erforderlich sind, ein geeignetes Übersetzungsverhältnis mit großer Kraftentfaltung vorliegt. Da dieses Übersetzungsverhältnis auch bei anderen Umdrehungen der Gewindespindel und damit in anderen Bewegungsphasen der Brühkammer vorliegt, in denen die Brühkammer eine geringere Verfahrgeschwindigkeit als nötig aufweist, können in diese Phasen andere Bewegungsabläufe verlegt werden, wie beispielsweise das Ausschwenken der Brühkammer.

Nach einer weiteren vorteilhaften Ausgestaltung der Erfindung kann der Kaffeevollautomat über eine Spindel-Brüheinheit mit einer Gewindespindel und einer darauf laufenden Spindelmutter verfügen. Die Spindelmutter enthält ein Innengewinde als Gegengewinde zu demjenigen der Gewindespindel und verfährt die Brühkammer bekanntermaßen relativ zu einem feststehenden Brühkolben. Erfindungsgemäß weist die Gewindespindel mindestens zwei Gewindeabschnitte mit unterschiedlichen Gewindesteigungen auf, und der Kaffeevollautomat umfasst Mittel zum sequenziellen Eingriff der Spindelmutter in die Gewindeabschnitte. Die Gewindespindel kann beispielsweise in einem unteren Bereich eine herkömmliche größere Gewindesteigung aufweisen und in einem oberen Bereich, in dem sich die Brühkammer während des Brühvorgangs befindet, kann sie eine geringere Gewindesteigung aufweisen, die je Umdrehung zu einer größeren Kraftentfaltung führt. Die Brühkammer ist regelmäßig über einen Brühkammerträger an der Gewindespindel beweglich geführt, der quasi eine Spindelmutter darstellt. Wegen der unterschiedlichen Steigungen der Gewindeabschnitte der Gewindespindel kann die Spindelmutter nicht in herkömmlicher Weise mit einem einzigen oder ohne Weiteres mit zwei entsprechenden, übereinander angeordneten Gegengewinden ausgestattet sein, da sie im ersten Fall auf eines der beiden Gewindeabschnitte nicht passt und im zweiten Fall wegen ihrer axialen Bewegung auf der Gewindespindel nicht gleichzeitig mit beiden Gewindeabschnitten der Gewindespindel kämmen kann. Erfindungsgemäß umfasst sie daher Mittel, die ihr einen sequenziellen Eingriff in die beiden Gewindeabschnitte ermöglichen. Dabei greift sie nicht wahllos entweder in den einen oder in den anderen Gewindeabschnitt ein, sondern gezielt zunächst in den einen und unmittelbar anschließend in den anderen Gewindeabschnitt. So erhält die Spindelmutter bei gleichbleibender Drehgeschwindigkeit der Spindel unterschiedliche Verfahrgeschwindigkeiten in Abhängigkeit davon, in welchen der beiden Gewindeabschnitte sie gerade eingreift.

Nach einer weiteren vorteilhaften Ausgestaltung der Erfindung kann die Spindelmutter anstelle ihres Gegengewindes lediglich mit einem Nocken je Gewindegang der Spindel ausgeführt sein, um sowohl in den Gewindeabschnitt mit größerer als auch in denjenigen mit geringerer Gewindesteigung einzugreifen. Damit lässt sich die Gewindespindel dem konkreten Bedarf an Kraftentfaltung während des Brühvorgangs anpassen. Ggf. kann sie über weitere Abschnitte mit einer abweichenden Gewindesteigung verfügen, um beispielsweise das Ausschwenken, einen Tresterabwurf oder ein Befüllen geeignet gestalten zu können.

Zumindest ein einzelner Nocken zum Eingriff in den Gewindeabschnitt der Spindel kann bei den in der Spindel-Brüheinheit auftretenden Axialkräften starkem Verschleiß unterliegen. Nach einer weiteren vorteilhaften Ausgestaltung der Erfindung kann die Spindelmutter daher einen orthogonal zur Spindelachse drehbar an ihr gelagerten Schlitten zum Eingriff in die Gewindeabschnitte umfassen. Anders als ein Nocken als Eingriffsorgan in die Gewindeabschnitte bietet der Schlitten eine quasi flächige Anlage im Gewinde, sodass die auftretenden Belastungen auf eine größere Fläche am Eingriffsorgan verteilt werden können. Dadurch können Verschleißerscheinungen reduziert werden.

Nach einer weiteren vorteilhaften Ausgestaltung kann die Gewindespindel einen Abschnitt mit geringerem Durchmesser zwischen den beiden Gewindeabschnitten aufweisen und die Spindelmutter zwei Gegengewindeabschnitte, die einen der Länge des Abschnitts weitgehend entsprechenden Abstand aufweisen. Die Spindelmutter kann eine Gabel ausbilden, an deren Zinken die beiden Gegengewinde mit unterschiedlicher Steigung angeordnet sind.

Der Abschnitt geringeren Durchmessers zwischen den beiden Gewindeabschnitten der Spindel kann weitgehend beliebig gestaltet sein, solange er einen vertikalen Abstand zwischen den Gewindeabschnitten der Spindel schafft und mit keinem der beiden Gegengewindeabschnitte der Spindelmutter in Eingriff treten kann. Die Abstände sowohl zwischen den Gewindeabschnitten als auch zwischen den Gegengewindeabschnitten führen dazu, dass bei geeigneter Bemessung der Abstände entweder nur der untere Gewindeabschnitt der Spindel und der untere Gegengewindeabschnitt der Spindelmutter in Eingriff sind, während sich das obere Gegengewinde im Bereich des Abschnitts geringeren Durchmessers auf der Spindel und damit außer Eingriff befindet. Wird nun die Spindelmutter auf der Gewindespindel vertikal nach oben gefahren, überfährt der obere Bereich der Spindelmutter den Abschnitt geringeren Durchmessers, bis er mit dem oberen Gewindeabschnitt der Spindel in Eingriff kommt. Zum selben Zeitpunkt kommen der untere Gewindeabschnitt der Spindel und das untere Gegengewinde der Spindelmutter außer Eingriff. Jetzt überfährt das untere Gegengewinde der Spindelmutter den Abschnitt geringeren Durchmessers, bis die Spindelmutter ihren obersten Punkt auf der Spindel erreicht hat.

Die Vertikalbewegung der Spindelmutter an ihrem obersten und untersten Punkt wird begrenzt, bevor ihr unteres Gegengewinde den oberen Gewindeabschnitt und ihr oberes Gegengewinde den unteren Gewindeabschnitt der Spindel erreicht. Damit zuverlässig jedenfalls eines der Gewinde- und Gegengewinde in Eingriff stehen und auch am Übergang bzw. Wechsel vom Eingriff der unteren Gewindepaarung und der oberen Gewindepaarung kein Moment ohne Eingriff zwischen Spindelmutter und Gewindespindel entsteht, kann zusätzlich eine kurze und begrenzte vertikale Bewegungsmöglichkeit entweder des unteren oder des oberen Gegengewindebereichs der Spindelmutter vorgesehen sein. Damit können ein kurzer Bereich bzw. wenige Umdrehungen oder Umdrehungsabschnitte der Gewindespindel existieren, in dem beide Gewindepaarungen zum Eingriff kommen, wobei die vertikale Bewegungsmöglichkeit einen Ausgleich für die dann unterschiedlichen Vertikalbewegungen schafft.

In dem vorgenannten Beispiel ist die vertikale Bewegung der Spindelmutter im Wesentlichen durch die Abstände zwischen den Gewindeabschnitten bzw. den Bereichen der Gegengewinde limitiert. Nach einer weiteren vorteilhaften Ausgestaltung der Erfindung können die Gewindeabschnitte der Spindel bzw. die Gegengewinde der Spindelmutter alternativ oder zusätzlich zu ihren Abständen jeweils unterschiedliche Durchmesser aufweisen. Beispielsweise mit einem oberen Gewindeabschnitt bzw. einem oberen Bereich des Gegengewindes mit größerem Durchmesser lässt sich die Gewindespindel so weit abwärts verfahren, dass das Gegengewinde größeren Durchmessers sich über dem Gewindeabschnitt kleineren Durchmessers an der Spindel befindet. Weil sie aufgrund ihres unterschiedlichen Durchmessers nicht in Eingriff kommen, kann die Abwärtsbewegung der Spindelmutter nicht blockiert werden. Der untere Gewindeabschnitt kann also in den Bereich des oberen Gegengewindes eintauchen. Dadurch kann die Gewindespindel kürzer und die Spindel-Brüheinheit insgesamt gedrungener ausgeführt werden.

Nach einer weiteren vorteilhaften Ausgestaltung der Erfindung kann die Spindel, zumindest eine sich kreuzende Zylinderkurve als Gewindegang bzw. als Nut aufweisen, in die zumindest ein drehbar gelagertes Schiffchen anstelle eines Gegengewindes an der Spindelmutter eingreift. Die sich kreuzende Zylinderkurve führt zu einem aufsteigenden und einem absteigenden Gewindegang, die sich an mindestens einem Punkt kreuzen. Sowohl der aufsteigende als auch der absteigende Gewindegang können wie im vorherigen Ausführungsbeispiel unterschiedliche Steigungen aufweisen und damit die Bereiche mit erhöhter bzw. verminderter Übertragungsgeschwindigkeit umfassen. Anstelle eines einfachen Nockens bzw. Zapfens dient ein drehbar gelagertes Schiffchen als Eingriffsorgan in den Gewindegang. Es kann gegenüber seiner Quererstreckung, die maximal die Nutbreite einnimmt, eine größere Erstreckung in Nutrichtung bzw. in seiner Bewegungsrichtung aufweisen. Dadurch erhält es an dem Kreuzungspunkt bzw. den Kreuzungspunkten der Zylinderkurve eine Führung, so dass es seinen Weg in der jeweiligen aufsteigenden oder absteigenden Zylinderkurve fortsetzt und nicht versehentlich vorzeitig die Richtung wechselt. Sowohl wegen der unterschiedlichen Steigungen der aufsteigenden und der absteigenden Zylinderkurve als auch wegen des Wechsels zwischen der aufsteigenden und absteigenden Zylinderkurve ist das Schiffchen an der Spindelmutter orthogonal zur Spindelachse drehbar gelagert. Durch die sowohl aufsteigenden als auch absteigenden Abschnitte der Zylinderkurve braucht die erfindungsgemäße Spindel ihre Drehrichtung nicht zu ändern, wenn die Bewegungsrichtung der Spindelmutter bzw. der dran angebrachten Brühkammer ihre Bewegungsrichtung zwischen der abgesenkten Position und der Brühposition ändert. Damit entfällt auch das Erfordernis, den Antrieb der Gewindespindel, also die Richtung des Elektromotors umzuschalten. Entsprechende Steuerungselemente können entfallen und der Motor kann konstant in eine Richtung drehen, was insgesamt den Aufbau des Kaffeevollautomaten weiter vereinfacht.

Das Prinzip der Erfindung wird anhand einer Zeichnung beispielshalber noch näher erläutert. In der Zeichnung zeigen:
- Figur 1:: einen Drehmomentenverlauf während eines Brühvorgangs,
- Figur 2:: ein nicht-lineares Getriebe mit elliptischen Zahnrädern, und
- Figur 3:: eine Gewindespindel mit verschiedenen Gewindesteigungen.

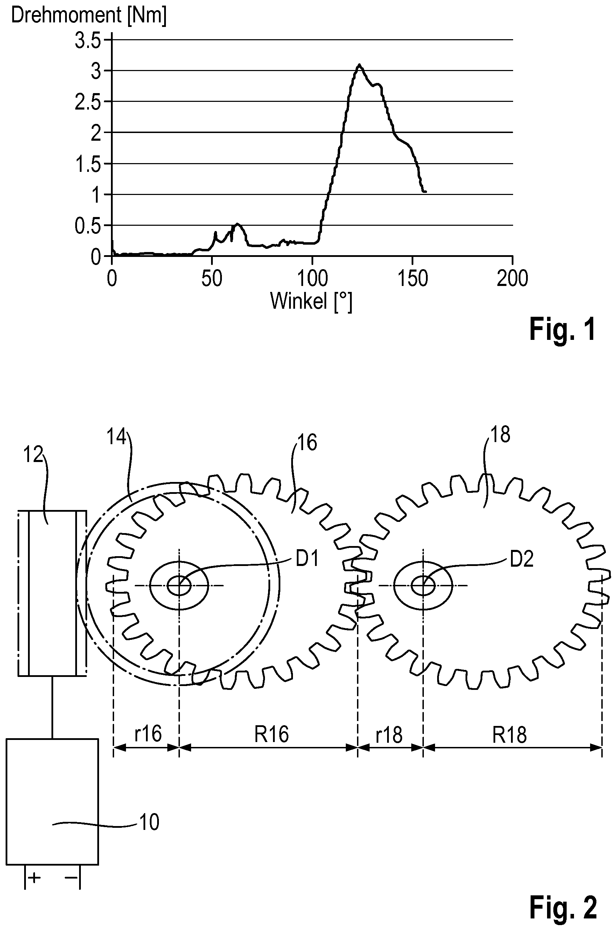

Figur 1 gibt den Drehmomentenverlauf an der Abtriebswelle eines Getriebes einer aus dem Stand der Technik bekannten Kniehebelbrüheinheit beim Verfahren in eine Brühposition wieder. Sie zeigt auf der Abszisse einen Drehwinkel der Abtriebswelle in der Einheit [°] und das anliegende Drehmoment in der Einheit Nm auf der Ordinate. Der Beginn der Abszisse bei 0° entspricht der Mahlposition, nach der die Brühkammer der Brüheinheit mit gemahlenem Kaffeepulver beladen wird. Bei einem Drehwinkel von etwa 100° beginnt der Schließvorgang, in dem die Brühkammer maximal gegen einen feststehenden Brühkolben verschoben ist, um das Kaffeemehl zu verpressen, bevor es mit Brühwasser beaufschlagt wird.

Der Drehmomentenverlauf zeigt, wie aus dem Stand er Technik bekannt, bei einem Winkel von 100 bis 130° einen sehr starken Anstieg. Er resultiert u.a. aus der Einführkraft eines O-Rings am Brühkolben in die Brühkammer und aus der Verpresskraft bei Verdichten des Kaffeemehls. Auf diese Lastspitze werden üblicherweise der Elektromotor und die Elektronik des Kaffeevollautomaten ausgelegt. Jenseits 130° fällt das Drehmoment wieder ab, was im Wesentlichen aus dem Kniehebel-Prinzip der Brüheinheit resultiert. Denn zum Ende der Bewegung hin wird der Kniehebel zunehmend durchgestreckt.

Figur 2 zeigt einen aus dem Stand der Technik bekannten Ausschnitt aus dem Antrieb eines Kaffeevollautomaten, der einen Gleichstrommotor 10 umfasst, auf dessen Abtriebswelle eine Schnecke 12 sitzt. Die Schnecke 12 treibt ein Schneckenrad 14 an, das koaxial und drehmomentenfest mit einem ersten elliptischen Zahnrad 16 verbunden ist. Eine gemeinsame Drehachse D1 des Ritzels 14 und des ersten elliptischen Zahnrades 16 ist bezüglich des elliptischen Zahnrades 16 exzentrisch angeordnet. Im Gegensatz zum Schneckenrad 14 "eiert" das erste elliptische Zahnrad 16 um seine Drehachse D1.

Das erste elliptische Zahnrad 16 kämmt mit einem zweiten elliptischen Zahnrad 18 mit weitgehend gleichen Abmessungen. Auch das zweite elliptische Zahnrad 18 dreht sich exzentrischen um einen Drehpunkt, nämlich um den Drehpunkt D2. Es treibt eine nicht dargestellte aber aus dem Stand der Technik bekannte Kniehebel-Brühgruppe an, so dass das nicht-lineare Getriebe 20 aus den beiden elliptischen Zahnrädern 16, 18 zwischen dem Motor 10 als Antrieb und der Kniehebel-Brühgruppe angeordnet ist. Am zweiten elliptischen Zahnrad 18 ergibt sich der in Figur 1 gezeigte Drehmomentenverlauf.

In der in Figur 2 dargestellten Position des nicht-linearen Getriebes 20 greift das erste elliptische Zahnrad 16 in einer Stellung mit einem maximalen Eingriffradius R16 in das zweite elliptische Zahnrad 18 ein, das zu diesem Zeitpunkt einen minimalen Eingriffradius r18 bietet. Das nicht-lineare Getriebe 20 ist also in einer Stellung dargestellt, in der es eine maximale Übertragungsgeschwindigkeit zwischen dem ersten elliptischen Zahnrad 16 und dem zweiten elliptischen Zahnrad 18 bietet. Gleichzeitig stellt es ein minimales Drehmoment zur Verfügung, womit in der Kniehebel-Brüheinheit ein minimales Kraftaufkommen zu erwarten ist. Diese Situation eignet sich beispielsweise zum Verfahren der Brühkammer in eine oder aus einer Befüllposition. Denn dafür sind nur geringe Kräfte erforderlich.

Die genau umgekehrten Verhältnisse liegen vor, sobald die elliptischen Zahnräder 16, 18 eine Drehung um 180° vollführt haben. Dann greift das erste elliptische Zahnrad 16 im Bereich seines minimalen Radius r16 am zweiten elliptischen Zahnrad 18 an, das zu diesem Zeitpunkt seinen maximalen Radius R18 erreicht hat. In dieser Position liegt eine minimale Übertragungsgeschwindigkeit und folglich ein maximales Drehmoment am zweiten elliptischen Zahnrad 18 und damit an der Kniehebel-Brüheinheit an. Diese Position eignet sich folglich zur Abdeckung einer Lastspitze, die - wie oben erläutert - beim Einfahren des Brühkolbens in die Brühkammer auftritt.

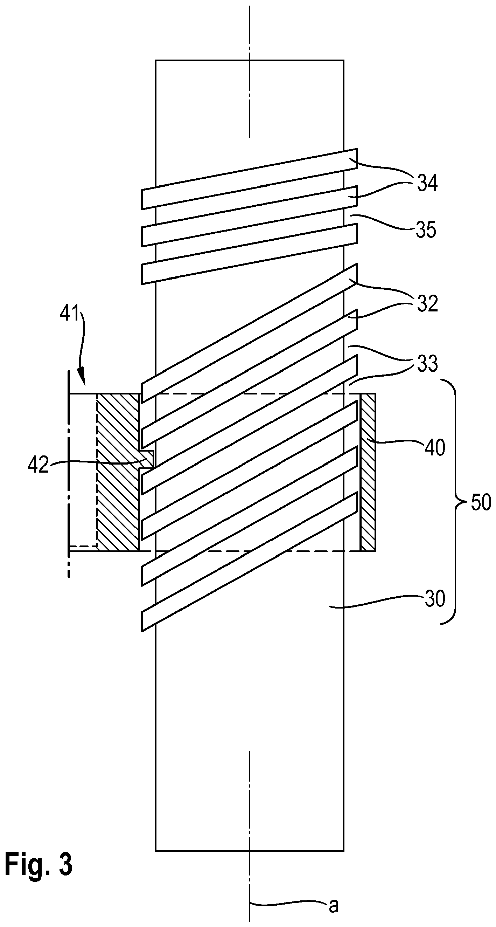

Figur 3 zeigt eine Ausgestaltung des erfindungsgemäßen, nicht-linearen Getriebes 50, dessen Bestandteil eine Gewindespindel 30 zum Verfahren einer nur angedeuteten Brühkammer 41 einer im Übrigen nicht dargestellten Brüheinheit dient. Die vertikal angeordnete Gewindespindel 30 wird über einen herkömmlichen Gleichstrommotor und ggf. ein an sich bekanntes Getriebe angetrieben. Zum Aufwärtsfahren der Brühkammer 41 lässt sich die Gewindespindel 30 in eine erste Richtung antreiben, zum Abwärtsfahren wird die Drehrichtung der Gewindespindel 30 umgekehrt. Die Gewindespindel 30 verfügt über ein rechtssteigendes Gewinde mit einem unteren Gewindeabschnitt mit Gewinderippen 32 und Gewindegängen 33 mit stärkerer Steigung und darüber über einen oberen Gewindeabschnitt mit Gewinderippen 34 und Gewindegängen 35 mit einer geringeren Steigung.

Auf der Gewindespindel 30 läuft eine Spindelmutter 40, die die angedeutete Brühkammer 41 der Brüheinheit trägt. Statt eines Innengewindes weist die Spindelmutter 40 lediglich einen Gewindenocken 42 als Eingriffsorgan auf, der in den Gewindegang 33 zwischen den Gewinderippen 32 eingreift und im oberen Gewindeabschnitt in den Gewindegang 35 eingreifen kann. Die Spindelmutter 40 ist in vertikaler Richtung an nicht dargestellten Schienen geführt, so dass sie durch Verdrehen der Gewindespindel 30 in deren Achsrichtung vertikal verschoben werden kann.

Solange sie sich im unteren Gewindeabschnitt der Gewindespindel 30, nämlich in demjenigen der Gewinderippen 32 befindet, lässt sich eine zügige Vertikalbewegung der Gewindemutter 40 durch die dort vorliegenden steileren Gewindegänge 33 - d.h. auch steilere Angriffswinkel am Nocken 42 - zwischen Nocken 42 und Gewindegang 33 erzeugen. Bei gleicher Winkelgeschwindigkeit der Gewindespindel 30 dagegen legt die Spindelmutter 40 eine geringere Vertikalbewegung zurück, wenn sie in den weniger geneigten Gewindegang 35 geführt ist. Wegen des dort gegebenen flacheren Angriffswinkels des Gewindegang 35 ergibt sich ein höheres Drehmoment, so dass die Spindelmutter 40 dort eine größere Vertikalkraft auf die Brühkammer 41 ausüben kann. Bei unveränderter Motorleistung kann daher eine beim Einfahren eines Brühkolbens in die Brühkammer 41 auftretende Lastspitze und eine Verpresskraft beim anschließenden Verpressen des Kaffeepulvers in der Brühkammer 41 aufgebracht werden. Damit kann ein gegenüber herkömmlichen Konstruktionen kleinerer bzw. schwächerer Antriebmotor eingesetzt werden. Mit einem herkömmlichen Motor dagegen lässt sich gegebenenfalls eine größere Verfahrgeschwindigkeit im unteren Gewindeabschnitt der Gewindespindel 30 erzeugen, so dass sich die Verfahrzeit der Brühkammer 41 und damit die Zubereitungszeit eines Kaffeegetränks verkürzen kann. Mit kleineren Motoren kann gegebenenfalls auch auf die Anordnung eines Thermoschutzschalters gegen Überlastschäden verzichtet werden, was die Herstellung des Kaffeevollautomaten verbilligt. Mit der Gewindespindel 40 mit mindestens zwei unterschiedlichen Steigungen ihres Gewindes lässt sich eine zumindest unverändert kompakte und leistungsfähige Getriebekonstruktion erreichen, die keinen erhöhten Platzbedarf erfordert. Schließlich können kleinere und kostengünstigere Netzteile zur Versorgung des Elektromotors verwendet werden, was wiederum der kompakten Bauart des Kaffeevollautomaten dient.

Da es sich bei den vorhergehenden, detailliert beschriebenen Getrieben um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Gewinde, Zahnräder und ihre Eingriffsorgane in anderer Form als in der hier beschriebenen folgen. Ebenso kann die Spindelmutter geteilt oder in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

## Patentansprüche

1. Kaffeevollautomat für Haushaltszwecke mit einer Spindel-Brüheinheit, mit einem Antrieb der Brüheinheit, mit einem Getriebe zwischen dem Antrieb und der Brüheinheit, **gekennzeichnet durch** einen elektromotorischen Antrieb (10) der Brüheinheit und **durch** einen nicht-linearen Getriebeabschnitt (20; 50) im Getriebe.

2. Kaffeevollautomat nach Anspruch 1, **gekennzeichnet durch** ein Zahn- oder Reibradgetriebe mit zwei ellipsenförmigen gekoppelten Rädern (16; 18) als nichtlinearem Getriebeabschnitt (20).

3. Kaffeevollautomat nach Anspruch 1, **gekennzeichnet durch** ein Kurbel- oder Kurvengetriebe als nichtlinearem Getriebeabschnitt.

4. Kaffeevollautomat nach einem der Ansprüche 1 bis 3 mit einer Spindel-Brüheinheit, **gekennzeichnet durch** einen nicht-linearen Getriebeabschnitt zwischen dem Antrieb und der Gewindespindel.

5. Kaffeevollautomat nach einem der Ansprüche 1 bis 3 mit einer Spindel-Brüheinheit, **gekennzeichnet durch** eine Spindel (30) mit mindestens zwei Gewindeabschnitten (32, 33; 34, 35), die unterschiedliche Gewindesteigungen aufweisen, und **durch** Mittel (42) zum sequenziellen Eingriff der Spindelmutter (40) in die Gewindeabschnitte.

6. Kaffeevollautomat nach Anspruch 5, **gekennzeichnet durch** eine Spindelmutter (40), die einen Nocken (42) zum Eingriff in die Gewindeabschnitte (32, 33; 34, 35) aufweist.

7. Kaffeevollautomat nach Anspruch 5, **gekennzeichnet durch** einen Abschnitt geringeren Durchmessers zwischen zwei Gewindeabschnitten (32; 35) und **durch** eine Spindelmutter (40) mit zwei Gegengewindeabschnitten, die weitgehend den gleichen Abstand wie die Gewindeabschnitte aufweisen.

8. Kaffeevollautomat nach Anspruch 5 oder 7, **gekennzeichnet durch** unterschiedliche Durchmesser der Gewindeabschnitte (32; 35) und **durch** eine Spindelmutter (40) mit zwei Gewindeabschnitten, die hinsichtlich der Gewindesteigung und des Durchmesser auf die Gewindeabschnitte (32; 35) angepasst sind.

9. Kaffeevollautomat nach Anspruch 1 bis 3 mit einer Spindel-Brüheinheit, **gekennzeichnet durch** eine Spindel (30) mit einer sich kreuzenden Gewindenut mit mindestens zwei Abschnitten, die unterschiedliche Gewindesteigungen aufweisen, und **durch** eine Spindelmutter (40), die anstelle eines Gegengewindes ein orthogonal zur Spindelachse drehbar an der Spindelmutter (40) gelagertes Schiffchen als Nocken aufweist.

## Claims

1. Fully automatic coffee maker for domestic purposes having a spindle brewing unit, having a drive of the brewing unit, having a gear between the drive and the brewing unit, **characterised by** an electromotive drive (10) of the brewing unit and by a non-linear gear portion (20; 50) in the gear.

2. Fully automatic coffee maker according to claim 1, **characterised by** a toothed gear or friction gear with two ellipsoidal coupled wheels (16; 18) as the non-linear gear portion (20).

3. Fully automatic coffee maker according to claim 1, **characterised by** a crank gear or cam mechanism as a non-linear gear portion.

4. Fully automatic coffee maker according to one of claims 1 to 3 having a spindle brewing unit, **characterised by** a non-linear gear portion between the drive and the threaded spindle.

5. Fully automatic coffee maker according to one of claims 1 to 3 having a spindle brewing unit, **characterised by** a spindle (30) with at least two threaded portions (32, 33; 34, 35), which have different thread pitches, and by means (42) for the sequential engagement of the spindle nut (40) in the threaded portions.

6. Fully automatic coffee maker according to claim 5, **characterised by** a spindle nut (40) which has a cam (42) for engagement into the threaded portions (32, 33; 34, 35).

7. Fully automatic coffee maker according to claim 5, **characterised by** a portion with a smaller diameter between two threaded portions (32; 35) and by a spindle nut (40) having two counter threaded portions, which to a large extent have the same distance as the threaded portions.

8. Fully automatic coffee maker according to claim 5 or 7, **characterised by** different diameters of the threaded portions (32; 35) and by a spindle nut (40) having two threaded portions which are adjusted to the threaded portions (32; 35) in respect of thread pitch and diameter.

9. Fully automatic coffee maker according to claim 1 or 3, having a spindle brewing unit, **characterised by** a spindle (30) having an intersecting thread groove with at least two portions, which have different thread pitches and by a spindle nut (40), which, instead of a counter thread, has a shuttle, as a cam, which is mounted orthogonally with respect to the spindle axis and can be rotated on the spindle nut (40).

## Revendications

1. Machine à café entièrement automatique à usage domestique comportant une unité de percolation à broche, un entraînement de l'unité de percolation, une transmission entre l'entraînement et l'unité de percolation, **caractérisée par** un entraînement (10) par moteur électrique de l'unité de percolation et par une partie de transmission non linéaire (20 ; 50) dans la transmission.

2. Machine à café entièrement automatique selon la revendication 1, **caractérisée par** une transmission par engrenage ou par friction comprenant deux roues couplées (16 ; 18) de forme elliptique comme partie de transmission non linéaire (20).

3. Machine à café entièrement automatique selon la revendication 1, **caractérisée par** une transmission à manivelle ou à came comme partie de transmission non linéaire.

4. Machine à café entièrement automatique selon l'une des revendications 1 à 3 comportant une unité de percolation à broche, **caractérisée par** une partie de transmission non linéaire entre l'entraînement et la broche filetée.

5. Machine à café entièrement automatique selon l'une des revendications 1 à 3 comportant une unité de percolation à broche, **caractérisée par** une broche (30) munie d'au moins deux parties filetées (32, 33 ; 34, 35) ayant des pas de filetage différents, et par des moyens (42) pour engager de manière séquentielle l'écrou de broche (40) dans les parties filetées.

6. Machine à café entièrement automatique selon la revendication 5, **caractérisée par** un écrou de broche (40), qui comporte une came (42) destinée à s'engager dans les parties filetées (32, 33 ; 34, 35).

7. Machine à café entièrement automatique selon la revendication 5, **caractérisée par** une partie de plus faible diamètre situées entre deux parties filetées (32 ; 35) et par un écrou de broche (40) muni de deux parties de contre-filetage, lesquelles ont sensiblement le même écartement que les parties filetées.

8. Machine à café entièrement automatique selon la revendication 5 ou 7, **caractérisée par** des diamètres différents des parties filetées (32 ; 35) et par un écrou de broche (40) muni de deux parties filetées, lesquelles sont adaptées aux parties filetées (32 ; 35) en termes de pas de filetage et de diamètre.

9. Machine à café entièrement automatique selon la revendication 1 à 3 comportant une unité de percolation à broche, **caractérisée par** une broche (30) munie d'une rainure à filetage croisé qui comporte au moins deux parties ayant des pas de filetage différents, et par un écrou de broche (40) qui présente à la place d'un contre-filetage une navette montée à rotation sur l'écrou de broche (40) de manière orthogonale à l'axe de broche.
